# EUROPEAN PATENT SPECIFICATION

(11) **EP 0 853 311 B1**
(45) Date of publication and mention of the grant of the patent: **27.10.1999**
(21) Application number: 98200330.3
(22) Date of filing: 14.03.1991
(51) Int. Cl.: G11B 5/60

(54) **Negative pressure air bearing slider**
Negativluftdruck-Kopfgleitstück
Patin de tête à pression négative

(30) Priority: 25.05.1990 US 528925
(43) Date of publication of application: 15.07.1998
(62) Divisional of application: 95200899.3
(73) Proprietor: SEAGATE TECHNOLOGY INTERNATIONAL, Georgetown Grand Cayman Island (KY)
(72) Inventor: Strom, Richard A., Eagan, Minnesota 55122 (US); Chapin, Robert E., Burnsville, Minnesota 55337 (US)
(74) Representative: Kenyon, Sarah Elizabeth

(56) References cited:
- EP-A- 0 155 756
- EP-A- 0 277 414
- EP-A- 0 308 527
- US-A- 4 673 996

## Description

The invention relates to a negative pressure air bearing slider for use in a magnetic head assembly of a rotary disk drive.

Magnetic head assemblies that fly relative to a rotating magnetic disk have been used extensively. Typically, these heads comprise a slider upon whose trailing end a transducer is mounted. Advantageously, the design is such as to enable the magnetic transducer to fly as close to the disk as possible, and the flying height to be uniform regardless of variable flying conditions, such as speed variation from inside track to outside, seek operations, and skew caused by rotary actuators. Flying height is viewed as one of the most critical parameters of non-contact magnetic recording.

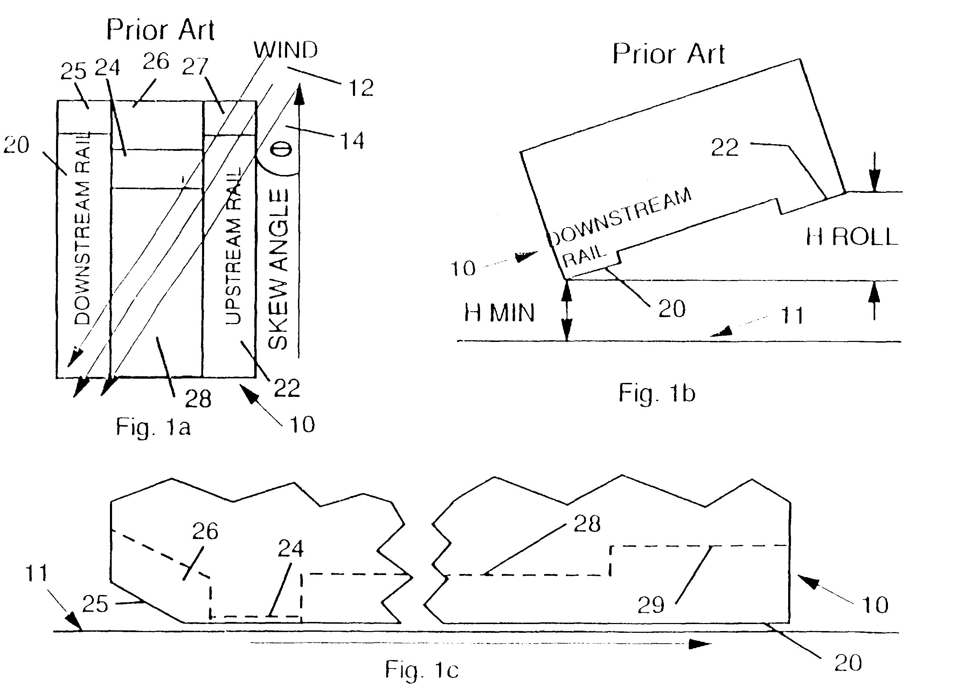

As disk drives become increasingly compact, rotary actuators with short pivot arms are increasingly employed. However, these actuators increase the difficultly of flying height control because a rotary actuator causes the geometric orientation between the slider, which is fixed to the pivot arm, and the tangent to the disk rotation to change as the actuator moves the slider over the disk surface. A measure of this orientation is given by the skew angle 14 as shown in Figure 1, which is defined as the angle between the slider's longitudinal axis and the direction of the disk's tangential velocity. (The "wind" caused by disk rotation is approximately parallel to this tangent). With the trend towards more compact disk drive packages for applications in smaller, more portable, equipment, there is a need to use shorter actuator pivot arms and thus create rather large skew angles.

However, conventional sliders are very sensitive to skew angles. Even with moderate skew angles in the 10 to 15 degree range, a conventional slider's flying height and roll angle (defined as the difference in flying height between inside and outside rails of the slider as shown in Figure 1b) are adversely influenced.

Increasing the skew angle at a fixed tangential velocity causes the slider pressure distribution to become distorted. This influences the net forces and torque acting upon the slider and results in both decreased flying height and increased roll. Because transducers are located at the trailing edges of the rails (as is conventional), roll affects transducer performance because of greater flying height variations.

The effect of flying at a skew angle also extends slider lift off thereby increasing wear, and exacerbates the negative effects of a rapid seek movement. Furthermore, conventional sliders are very sensitive to disk surface speeds. With linear actuation (i.e. the skew angle as a constant 0 degrees), flying height is higher at outer disk radii. While this may be alleviated somewhat with optimised rotary actuator designs, the flying height is still dependent upon disk speed.

A conventional "zero load" or negative pressure air bearing ("NPAB") slider can achieve a flying height substantially independent of disk speeds. However, at skewed conditions, the NPAB slider exhibits excessive roll and average flying height loss because its down stream rail receives little air from its negative pressure cavity while at the same time its up stream rail is receiving air at ambient pressure.

Thus, there is a need for a negative pressure air bearing slider having a near constant, but low, flying height when used in conjunction with short arm rotary actuators and/or with high seek velocities wherein

EP-A-155 756 discloses an NPAB slider with grooves to create a neutral pressure zone separation said slider comprising: two side rails; a cross rail; a negative pressure cavity disposed between the side rails and between the cross rail and a trailing edge of the slider; and a pair of isolation means disposed between the negative pressure cavity and the side rails, wherein said isolation means substantially isolate positive pressure adjacent a side rail from at least part of the negative pressure cavity, as defined in the preamble of claim 1.

Thus, there is a need for a negative pressure air bearing slider having a near constant, but low, flying height when used in conjunction with short arm rotary actuators and/or with high seek velocities wherein reading from a disk during the seek operation is continued for reading track addresses, for example. Preferably, the slider will exhibit little or no roll over a wide variation in skew angles. The slider also preferably achieves a rapid take off but can still fly low at full speed.

It is the object of the present invention to provide a negative pressure air bearing slider, which displays reduced skew angle effects.

According to the present invention, there is provided a negative pressure air bearing slider for a magnetic head of a rotary disc drive, characterised in that the isolation means terminate in the negative pressure cavity so do not extend to the trailing edge.

The use of isolation channels cause the NPAB slider to have greater sensitivity to flying speed because of the reduced inter-action of the positive and negative pressure effects. The increase in flying height at higher disk surface speeds can be lessened either by shortening or by widening the isolation channel separating rail near the trailing edge of the flyer.

The invention is described further, by way of example, with reference to the accompanying drawings in which:
Figure 1a is a bottom plan view of a conventional H-shaped negative pressure air bearing (NPAB) slider and an illustration of the angle defined to be skew angle;
Figure 1b is an illustration showing, in exaggerated form, roll for the conventional NPAB slider under the influence of wind from the direction shown in Figure 1a;
Figure 1c is a partial side plan view showing the conventional NPAB slider riding on an air bearing above the disk surface;
Figures 2a to 2d are various views of an NPAB slider having isolation channels;
Figures 3a to 3k are bottom plan views of alternative embodiments of the NPAB slider having isolation channels;
Figures 4a to 4f are bottom plan views of alternative embodiments of the NPAB slider having a take off assist spoiler and either isolation channels or a divided negative pressure cavity or both; and
Figures 5a to 5f are bottom plan views of alternative embodiments of the NPAB slider having fast take off extended front tapers and anterior pressure reduction channels.

Figure 1a is a bottom plan view of a conventional H-shaped NPAB slider 10 flying into the wind at an angle θ. The source of the wind is the rotation of the disk surface below the slider, movement of the slider relative to the surface by the disk drive's actuator arm (not shown) during a seek operation, and/or the wind from the sweeping action across the rotating disk surface.

The conventional NPAB slider 10 has two "high pressure" rails 20 and 22 (each of which has a leading taper 25, 27 respectively for funnelling air under the rails), a cross rail 24, a negative pressure cavity 28, and a leading cavity 26.

With the wind impinging on the slider 10 as shown in Figure la, the leading (or up stream) rail 22 remains pressurised, but to a lesser extent then when the slider 10 is flying directly into the wind with a skew angle of 0 degrees, both because of the shortened rail length relative to the direction of the wind and because of the diminished effect of the forward tapers which act as "scoops" to funnel air under the rails. As the negative pressure cavity does not permit air to traverse laterally to the trailing (or down stream) rail 20, much less air reaches this rail for pressurisation. The net result is that the leading rail 22 drops slightly, the trailing rail drops even more and the entire slider 10 flys at a reduced height.

Figure 1b shows such slider roll in great exaggeration. Normally, the slider 10 will fly about 8 micro-inches (0.2 mm) off the disk surface 11 with each rail 20, 22 about the same distance from the disk surface 11. If the sliders motion relative to a disk tangent is skewed (θ > 0 degrees or θ < 0 degrees), the conventional slider rolls. A 2 micro-inch (0.05 mm) difference in flying height between the trailing and leading rails 20 and 22 is considered to be a large roll.

In Figure 1b, H ROLL designates the difference in flying height of the two rails 20 and 22, and H MIN designates the flying height of the lowest rail (in this case the rail 20). Significantly, when the slider 10 rolls, H MIN also decreases from its value when there is zero roll. If H MIN decreases too much, not only is transducer performance affected, but the head could "crash", causing catastrophic failure.

Figure 1c is a partial side plan view of the slider 10 flying close to the disk surface 11. As stated above, typical flying heights are 8 micro-inches (0.2 mm).

As shown, the conventional H-shaped slider 10 is formed with the leading cavity 26, which is preferably made deep, and which may be cut through the whole slider body. This leading cavity 26 reduces the flying pitch of the slider 10 and thereby the height to which it would otherwise fly.

Just after the leading cavity 26 is the cross rail (or cross bar) 24. The cross rail 24 is preferably recessed slightly by about 40 micro-inches (0.1 mm) from the level of the rails 20, 22. This prevents small particles of debris from collecting in the leading cavity 26. The recess of the cross rail 24 slightly reduces the negative pressure effectiveness of the negative pressure cavity 28. However, it also allows some air into the negative pressure cavity 28 on take off to reduce the negative pressure holding the slider 10 to the disk surface 11.

The use of the recessed cross rail 24 is optional. It has been included as an example in several of the embodiments that follow in the Figures. The importance of a recessed cross rail is not a requirement for obtaining the beneficial effects of the other features described.

Typically, the negative pressure cavity 28 will be a recess 350 micro-inches (8.89 mm) deep from the level of the rails 20 and 22. The conventional slider body is typically 0.125 inches (3.18 mm) wide, 0.160 inches (4.06 mm) long and 0.034 inches (0.86 mm) high. Leading tapered edges 25 and 27 of the rails taper to a depth of 200 micro-inches (5.08 mm) from the level of the rails 20, 22. Each rail 20, 22 is approximately 0.026 inches (0.66 mm) wide and the cavity 28 is 0.071 inches (1.8 mm) wide at the cross rail 24. Unless otherwise mentioned, the dimensions of the sliders according to the preferred embodiments of the present invention are generally similar to the dimensions of the conventional H-shaped NPAB slider 10 of Figures 1a to 1c. It should be noted that the slider dimensions can be scaled up or down to achieve larger or smaller sliders with similar characteristics.

Figure 1c also shows a feature which is not found in the prior art: a step 29 in the cavity depth of the cavity 28. This feature will be discussed in more detail later.

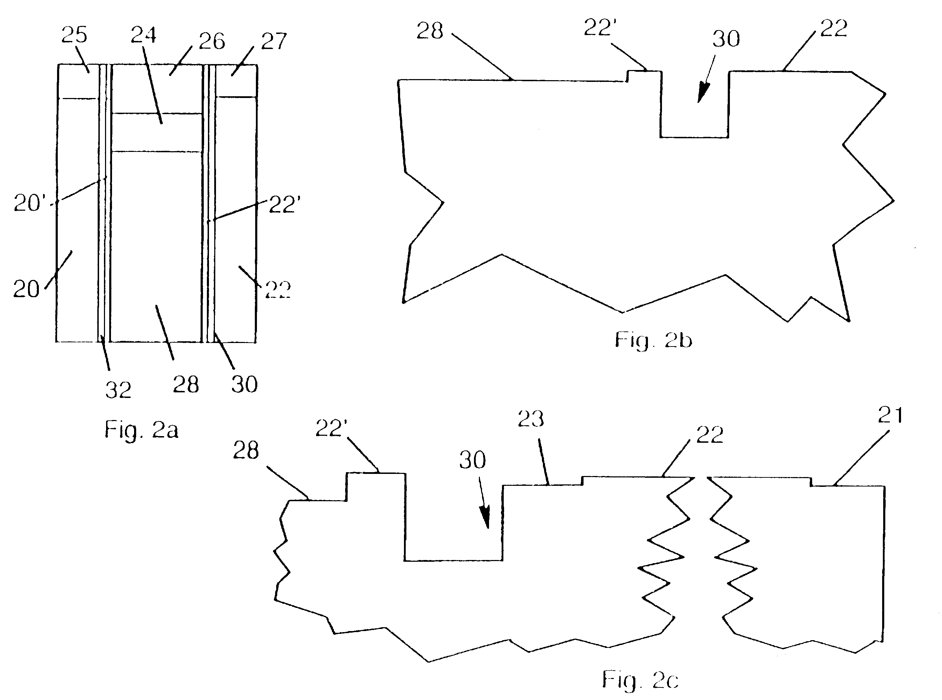

In Figures 2a to 2d, isolation channels 30 and 32 extending from the forward edge of the slider to the trailing edge are located adjacent to the inside of the positive pressure rails 20 and 22 and provide a source of near ambient pressure air along their length. When the slider is flying at a skew angle, the trailing rail 20 draws air from the channel 32 to pressurise and lift the slider on the down stream side, thus reducing the roll. Located between the channels 30 and 32 and the negative pressure cavity 28 are separating rails 22' and 20', respectively.

Figure 2b is a detailed cross section showing the rail 22, the isolation channel 30, the separating rail 22' and the negative pressure cavity 28. The channels 30 and 32 are made relatively deep and wide, eg 0.004 inches by 0.004 inches (0.1 mm by 0.1 mm), in order to provide as little pressure drop along their length as possible.

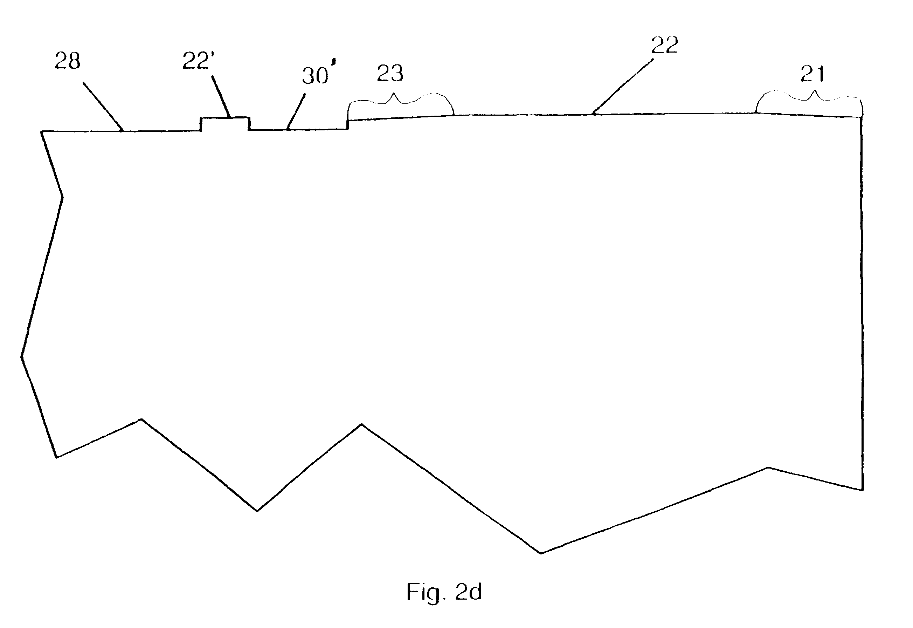

Figure 2c shows a similar cross section of the rail 22, the isolation channel 30, the cavity 28 and the isolation channel separating rail 22' separating the isolation channel from the cavity. In the embodiment of Figure 2c the edges of the rails include steps 21, 23 for easing the transition of air from a rail edge to the rail itself. These optional edges are preferably chamfered as shown in the embodiment of Figure 2d. However, processing chamfered edges is difficult, while steps can be formed from conventional processes such as ion milling.

The inside step 23 eases the transition of air from the channel 30 to the rail 22 when the channel is "up stream" from the rail and aids in pressurisation along the entire length of the rail. The step 21 similarly aids in pressurisation of the rail 22 along its entire length when the step 21 is flying up stream to the rail (into the wind).

In Figure 2c, the rail 22 is 0.02 inches (0.51 mm) wide, the channel 30 is 0.004 inches (0.1 mm) wide, and the isolation channel separating rail 22' is 0.002 inches (0.05 mm) wide. An important feature of the isolation channel separating rail 22' is that it has sufficient width to isolate the cavity 28 from the channel 30 but is not sufficiently wide to act as a rail itself.

Figure 2d is a similar cross section of the rail 22 having an alternative relatively shallow isolation channel 30'. Because of the shallow depth, the air pressure along the channel 30' increases above the ambient pressure fore to aft. Unlike the deep channel 30 of Figure 2c (which has near ambient pressure along its length), in Figure 2d the shallow channel air pressure will be a complex function of flying speed and skew angle as well as position (along its length). Nevertheless, the shallow channel 30' provides a similar benefit of reducing roll and loss of flying height over a range of skew angles.

Also, the isolation channel 30' and steps or chamfers may not necessarily have a constant width or depth along their lengths. It should be noted also that the negative pressure cavity 28 need not be a constant depth. The cavity 28 may be stepped as at 29 in Figure lc (which is not prior art) or tapered in a variety of configurations to alter the negative pressure characteristics. These variables can be manipulated by the designer for a specific application to provide custom flying performance.

In Figure 2d, the rail 22 is 0.02 inches (0.51 mm) wide, the channel 30' is 0.004 inches (0.1 mm) wide, and the isolation channel separating rail 22' is 0.002 inches (0.05 mm) wide. The depth of the channel 30' is approximately the same as the depth of the negative pressure cavity 28, i.e. 350 micro-inches (8.89 mm) in the preferred embodiment. The chamfers 21 and 23 are each approximately the same width as the channel 30', i.e. 0.004 inches (0.1 mm), and taper to a depth of about 40 micro-inches (1.02 mm) in the preferred embodiment.

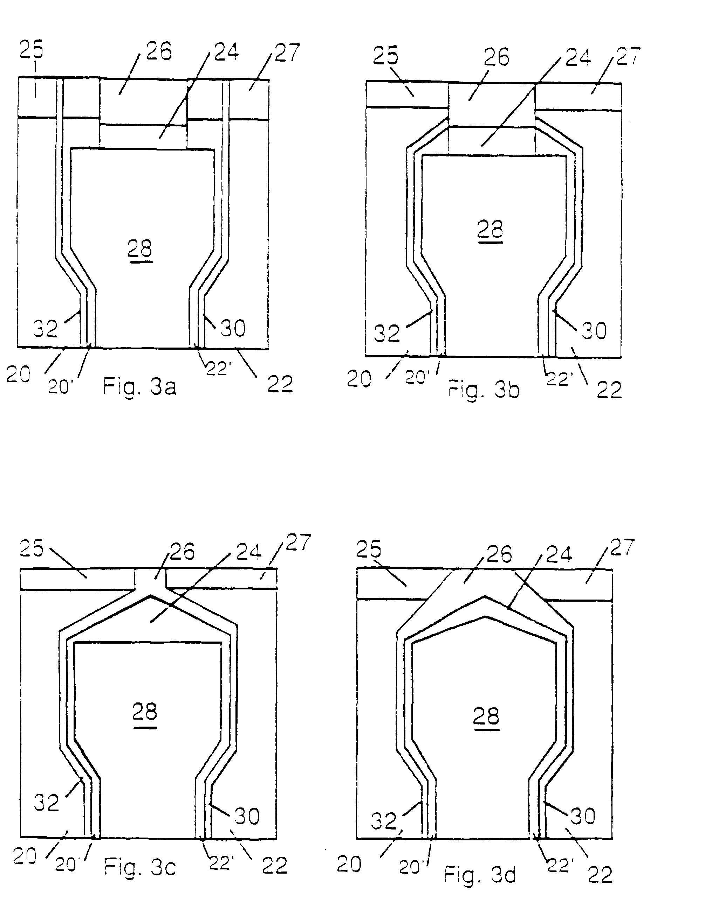

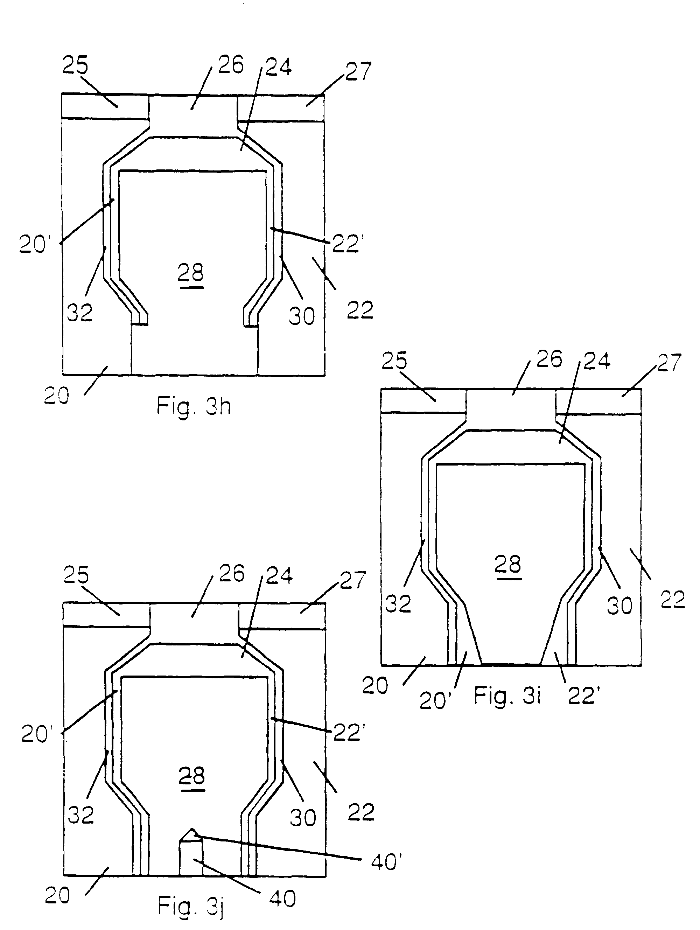

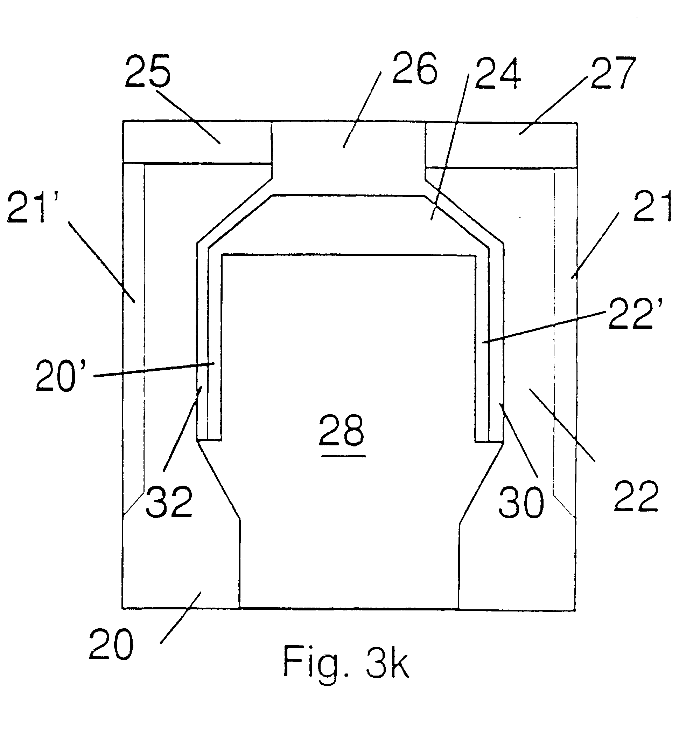

Figures 3a to 3k show alternative arrangements for the isolation channel. In Figure 3a, both the width of the leading cavity 26 and the trailing portion of the negative pressure cavity 28 are reduced, with corresponding increases in width for the leading tapers 25, 27 and trailing ends of the rails. This configuration provides for faster take off, but the large trailing rail portions and smaller trailing negative cavity portion reduce pitch and reduce the increase in flying height at higher speeds.

In Figure 3b, the isolation channels 30 and 32 are angled into and intersect the leading cavity 26. As the skew angle increases, air flow into the channel 30 or 32 which is more aligned with the direction of motion increases, while air flow into the other decreases. The net result is that more air is available to pressurise the trailing rail thus reducing roll.

In Figure 3c, the leading cavity 26 is even further reduced and the cross rail 24 is shaped like an arrow head to enhance the funnelling effect of air into the down stream isolation channel. Moreover, the increased frontal area provides greater lift, especially on take off.

In Figure 3d, the size of the cross rail is reduced from Figure 3c so that it is now "V" shaped and the isolation channels 30 and 32 are widened to consume the entire leading cavity or recess. This design reduces over pressure at the leading edge during high speed operation, increases the air flow into the down stream isolation channel and thus the skew compensation and further increases the size of the negative pressure cavity 28 for lower flying height.

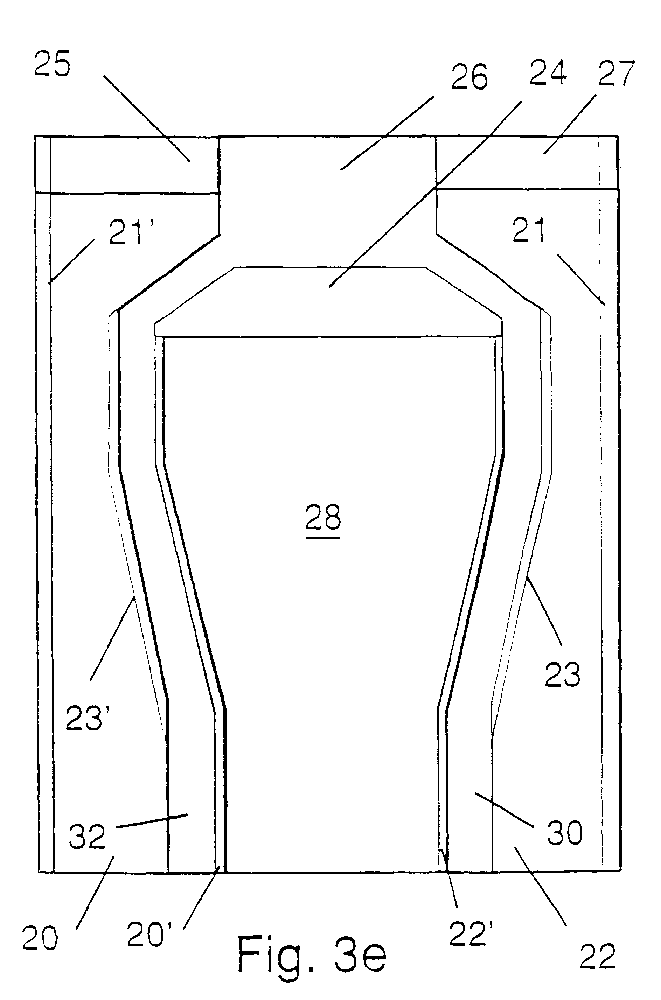

Figure 3e is similar to Figure 3b. However, here the entire cross rail 24 is recessed vertically. Further, the isolation channels 30 and 32 are shallower, and broader than the isolation channels shown in Figure 3b. Thus their capacities are increased so that they provide an adequate source of air in use to the pressurised rails 20 and 22. Furthermore, the rails include edge steps (or tapers) 21 and 21' and 23 and 23' to ease pressurisation at a skew angle as discussed above. An important feature of this design is that the negative pressure cavity 28 and the isolation channels 30 and 32 are approximately the same depth so that they may be formed during a single ion milling step. As well, the cross rail recesses 24 and edge steps 21, 21' 23 and 23' are approximately the same depth so that they may be formed during a single ion milling step.

In Figure 3e, the overall length and width of the slider is 0.16 inches by 0.121 inches (4.06 mm by 3.07 mm). The outside edge steps 21 and 21' are 0.004 inches (0.1 mm) wide. The inside steps 23 and 23' are 0.002 inches (0.05 mm) wide. The isolation channels 30 and 32 are 0.006 inches (0.15 mm) wide. The isolation channels separating rails 20' and 22' are 0.002 inches (0.05 mm) wide. The negative pressure cavity 28 at its forward end is 0.066 inches (1.68 mm) wide, and at its trailing end is 0.589 inches (14.96 mm) wide. The leading edge taper 25, 27 is 0.014 inches (0.36 mm) wide. The length and width of the leading cavity 26 are 0.589 inches by 0.031 inches (14.96 mm by 0.79 mm). The length of the cross rail 24 at its leading edge is 0.04 inches (1.02 mm), its length at its trailing edge is 0.07 inches (1.78 mm) and its width is 0.013 inches (0.33 mm). The distance from the leading edge to the first channel bend is 0.07 inches (1.78 mm), and to the second bend is 0.125 inches (3.18 mm). The depth of the steps 21, 21', 23 and 23' at the cross bar 24 recess is 0.04 inches (1.02 mm).

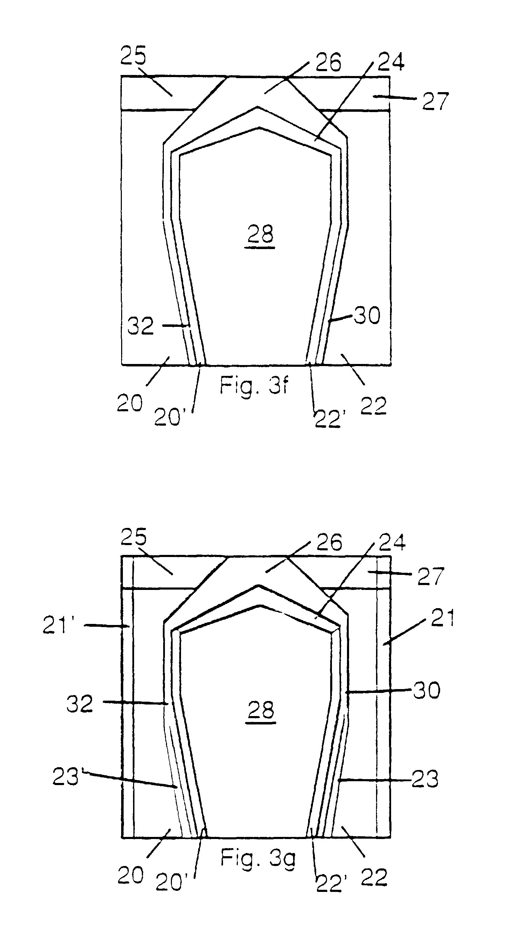

Figure 3f is a design similar to that of Figure 3d with straight-angled isolation channels 30 and 32. The straight-angled channels are provided by removing the final outward bend therein. The longer angled inside edge of the down stream rail is more effective in pressurising the air supplied by the adjacent isolation channel 30 or 32, thus improving the roll compensation versus skew angle.

Figure 3g is a design similar to that of Figure 3f with the addition of a vertical recess to the cross rail 24, steps 23 and 23' along the trailing portions of the rails 22 and 20 respectively, and steps 21 and 21' in the outside edges of the rails. The steps further improve the pressurisation of the down stream rail in use. The recessing of the cross rail 24 reduces the chance of debris collection at the cross rail 24 and further aids in breaking the negative pressure cavity 28 vacuum at take off.

Figures 3h to 3j shows alternative isolation channel arrangements designed to reduce the flying height sensitivity of the flyer to increased disk speed.

In Figure 3h, the isolation channels 30 and 32 do not extend the full length of the rails 20 and 22, but instead terminate and communicate with the negative pressure cavity 28. An increase in flying height at higher speeds can be lessened by shorting the isolation channel separating rails 20' and 22'. This allows greater inter-action of the positive and negative pressure effects.

In Figure 3i, the isolation channel separating rails 20' and 22' are widened at the trailing end of the negative pressure cavity 28 to provide greater lift there.

In Figure 3j, an island 40 is formed in a centre region of the negative pressure cavity 28 adjacent the trailing edge of the cavity. The island 40 is substantially the same height as the rails 20 and 22. A tapered or stepped forward end 40' increases pressurisation of the island 40 in use. The island 40 improves the flying characteristics of the slider by reducing flying height variation.

Preferably, the slider has a near flat flying profile between an inner and an outer radius of the disk. In other words, the slider preferably flys at substantially the same height above the disk surface 11 (shown in Figure 1c) at the inner radius as it flys at the outer radius. However, the velocity of the air being dragged between the slider and the disk at the inner radius is less than the velocity at the outer radius. As a result, the positive pressure that builds along the rails 20 and 22 is less at the inner radius than at the outer radius, causing the slider to fly lower at the inner radius than at the outer radius.

The island 40, however, reduces the effects on flying height caused by changes in the air velocity. At low speeds, the air travelling beneath the island 40 pressurises the island and produces lift at the trailing edge of the slider. This lift increases the flying height at the inner radius of the disk. At high speeds, the effective pressure on the island 40 is diminished, relative to the increasing effects of the negative pressure cavity 28. Therefore, the island 40 has almost no effect on flying height at the outer radius of the disk. The overall result is a flatter flying profile between the inner radius and the outer radius of the disk. The flying height variation is further reduced by positioning the transducer on the island 40 since the island is generally co-incident with the roll axis (not shown) of the slider.

Figure 3k shows isolation channels 30 and 32 terminating generally adjacent to side rail break points. At the break points, the side rails 20 and 22 begin to broaden towards the trailing edge of the slider. The isolation channels 30 and 32 shown in Figure 3k are shorter than those shown in Figure 3h and allow for greater inter-action of the positive and negative pressure effects for further decreasing flying height.

Figure 3k also shows the edge steps 21 and 21'. However, unlike Figure 3e, the steps 21 and 21' do not extend the full length of the rails 20 and 22 but terminate generally adjacent to the side rail break points. The terminated edge steps 21 and 21' ease pressurisation of the rails at a skew angle and provide a large rail surface area near the trailing edge. Increasing the rail surface area near the trailing edge increases the pressure on the rails 20 and 22 during flight. The increased pressure stablises the slider flight and provides a constant flying height through varying skew angles.

Figures 4a to 4f illustrate selective spoiling of the negative pressure in cavity 28 both to shorten take off and compensate for skew effects.

Figure 4a illustrates the basic spoiler concept. Here, a circuitous spoiler channel 31 is formed in the cross rail 24 to communicate air between the leading cavity or recess 26 and the cavity 28. The spoiler channel 31 functions similarly to a recessed cross bar in reducing take off speeds. The air flow through the spoiler channel 31 is proportional to the pressure difference across the cross bar 24. The dimensions of the spoiler channel 31 must be chosen so that there will not be a large reduction in the negative pressure within the cavity 28 at higher flying speed. Skew compensation is provided by the isolation channels 30 and 32 as before.

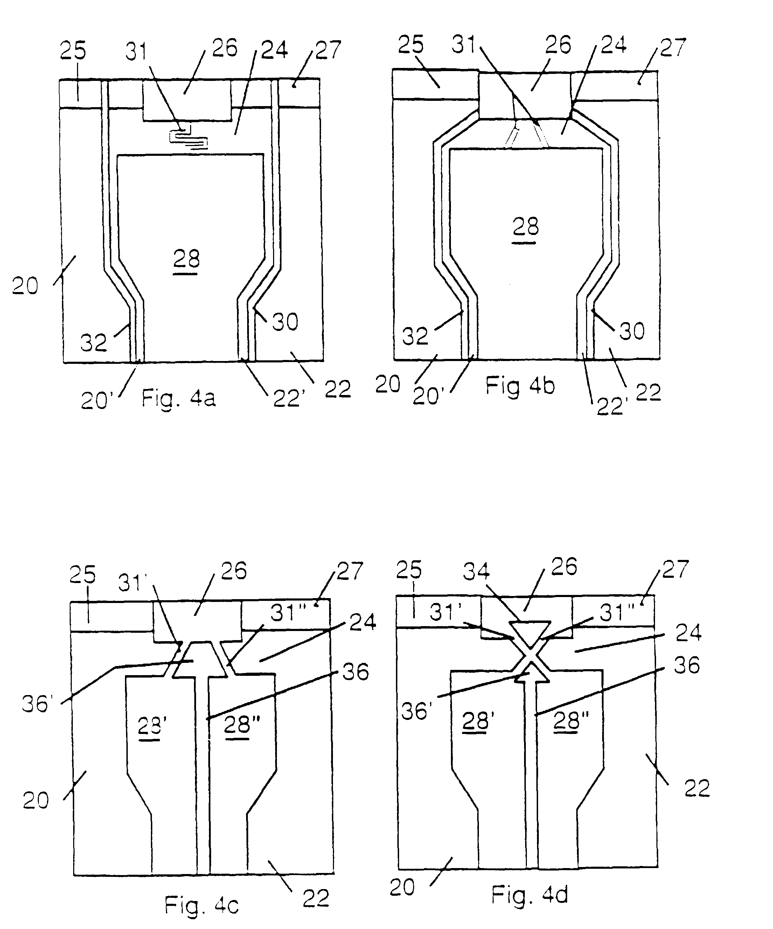

Another variation of the negative pressure spoiler is shown in Figure 4b. Here, the spoiler channel 31 is split into two angled segments. The effect of these angled channel segments increases when flying at positive or negative skew angles. These spoiler channels 31 help reduce the overall loss of flying height when flying at skew angles. The isolation channels 30 and 32 are angled into the leading cavity 26 and perform in a similar fashion to those described in Figure 3b.

Figure 4c shows additionally a negative pressure cavity divider bar 36 whose head 36' is arrow shaped to provide two angled spoiler channels 31' and 31" leading to negative pressure cavities 28' and 28" respectively. The spoiler channels 31' and 31" assists in breaking negative pressure on take off, and the angles retard air entry into the cavities 28' and 28" at speed. However, when the slider flys at a skew angle, one of the spoiler channels will begin to line up with the direction of motion and more air will enter the corresponding down stream cavity, thereby reducing negative pressure effects in that cavity. Correspondingly, the other spoiler channel will become less aligned with the direction of motion and less air will spoil the negative pressure in the up stream or leading cavity thereby increasing its negative pressure effects. The overall negative pressure effects will be approximately the same. However, the tendency of the slider to roll with the leading rail high will be lessened by the increased negative pressure in the leading cavity and the reduced negative pressure trailing cavity.

Figure 4d shows another variation on the same theme. Here, the divider path 36 is slightly shortened and a leading triangular block 34 is added. The block 34 acts to reduce spoiling air flow into the cavities 28' and 28" with no skew angle, to a greater extent than the design of Fire 4c. The spoiler channels 31' and 31" are now crossed. Air flows through the crossed spoiler channels 31' and 31" in a generally constricted manner as with the other spoiler channels. However, when one of the channels becomes more aligned with the direction of motion, the flow therethrough increases while flow simultaneously decreases in the other channel. With better alignment, the overall flow increases into the down stream negative pressure cavity 28' or 28". With appropriate dimensions, the cross spoiler channels 31' and 31" can be made to function as a fluidic type device whereby the differences in the quantity of air flow to the divided cavities 28' and 28" can be greatly enhanced providing a greater amount of slider roll compensation.

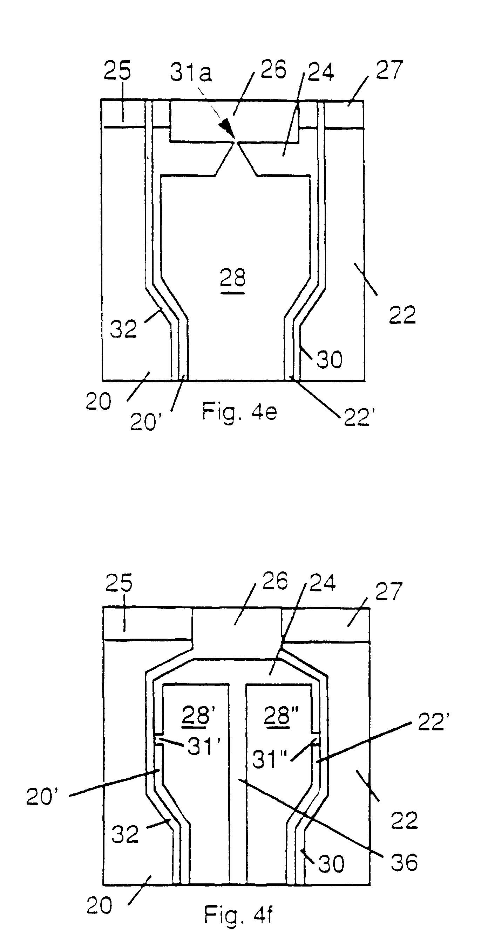

Figure 4e shows an alternative spoiler design. Here, a choke 31a is employed which passes air at low speeds but which causes air flow to approach a constant at higher flying speeds when the speed of the air within the choke 31a approaches sonic velocities. Thus, the primary spoiling effect of air through the choke 31a occurs at low speed. This improves the take off characteristics at low speeds without spoiling the negative pressure at much higher speeds.

Figure 4f shows an alternative spoiler channel location when isolation channels 30 and 32 are included. The spoiler channel 31 may be located to communicate through the isolation channel separating rails 22' and 20' between the negative pressure cavity 28 and the isolation channels 30 and 32. Here, the negative pressure cavity is divided into two cavities 28' and 28" and the isolation channels 30 and 32 are inclined into the leading cavity 26. At a skew angle, the pressure in the down stream isolation channel increases, thereby increasing the spoiling effect of the down stream cavity. Thus, roll is decreased by having relatively greater negative pressure in the up stream cavity. This design has some similarities with the design of Figure 4b. Here, the spoiler channels 31' and 31" are moved around to the sides and a divider bar 36 is added.

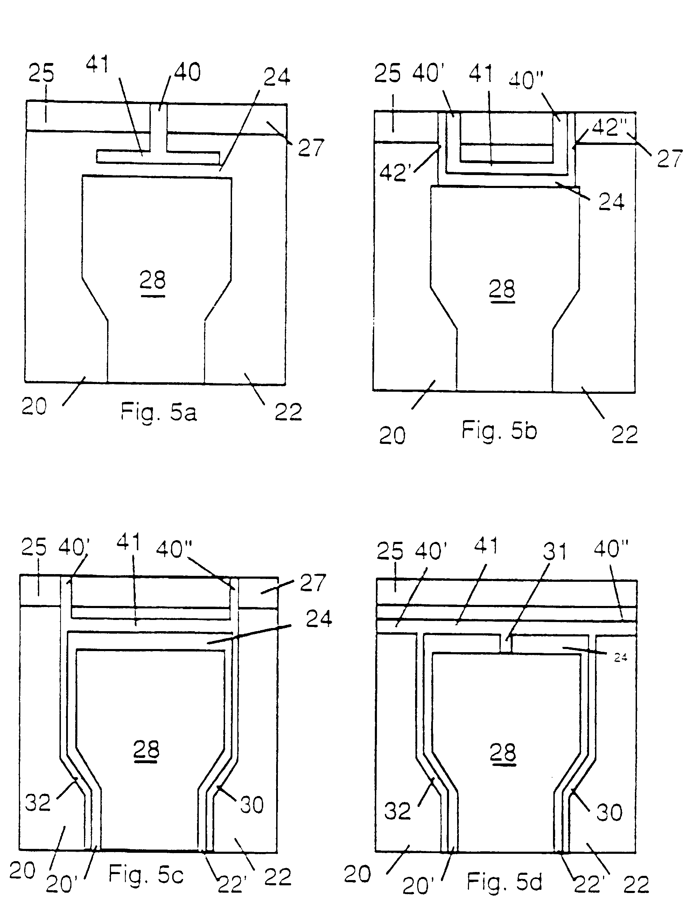

Figures 5a to 5g illustrate several variations of a highly enlarged leading edge taper section 25, 27, which increases lift to provide for shorter take off. Each variation includes a pressure reduction channel 41 anterior to the cross rail both to reduce the over pressure of the leading taper at speed and to maintain a high degree of negative pressure in the cavity 28.

Figure 5a illustrates the basic concept. Broad leading tapers 25, 27 are provided. Just after the leading taper and anterior to the negative pressure cavity 28, a pressure relief channel 41 is provided. Preferably, this channel is open to ambient air pressure to vent air flowing past the leading tapers 25, 27. In Figure 5a, the vent is provided by a channel 40 leading to the forward edge of the slider.

The pressure relief channel anterior to the negative pressure cavity 28 prevents air scooped up by the leading taper from entering the negative pressure cavity 28 to spoil the negative pressure. This results in a slider that has good take off characteristics and also low flying height. Further, it has been found to have a relatively constant flying height versus speed, a desirable property, and a higher flying height at low speeds than the conventional NPAB slider.

Figure 5b illustrates a variation which provides two lateral access channels 40' and 40" from the leading edge of the slider to the anterior pressure relief channel 41. Additional edge steps or tapers 42' and 42" communicating between the leading sections of the rails 20 and 22 and the access channels 40' and 40" act, in conjunction with the access channels, to provide air to the leading portion of the down stream or inside rail at a skew angle in use. The cross rail 24 is shown recessed in this design. The effect is similar to a limited isolation channel and may be particularly useful for sliders having only small skew angle variations in use.

Figure 5c illustrates a variation which provides two lateral access channels 40' and 40" from the leading edge of the slider to the anterior pressure relief channel 41. These access channels are in turn connected to isolation channels 30 and 32. This design provides a high degree of skew compensation with good take off and flying height properties.

Figure 5d illustrates a variation which provides two lateral access channels 40' and 40' communicating between the pressure relief channel 41 and the side edges of the slider. These channels are in turn connected to the isolation channels 30 and 32. This design provides pressure reduction along the entire length of the leading taper section (25), including in front of the rails 20 and 22 and cross rail 24. As well, an optional spoiler channel 31 connects the anterior pressure relief channel to the negative pressure cavity 28 to assist in take off as described above.

In this design, the frontal area of the leading taper section 25 is maximised for fast take off while the isolation channels provide skew compensation. The presence of the pressure relief channel 41 in front of the rails 20 and 22 reduces their effectiveness slightly so that high speed over pressure from the large leading taper section 25 is reduced.

Figure 5e shows another variation which connects the anterior pressure relief channel 41 to ambient air through the isolation channels 30 and 32. Here, the area of the leading taper section 25 is again maximised for fast take off, and skew compensation is provided by the isolation channels 30 and 32. Pressurised air flowing past the front taper section 25 enters the pressure relief channel 41 and exits through the isolation channels 30 and 32. At a skew angle, this air tends preferably to flow into the down stream isolation channel, which enhances skew compensation. This design includes a recessed cross bar 24, which increases the air flow in the isolation channels 30 and 32.

Figure 5f shows another variation which provides a single anterior pressure relief channel 41 spanning the slider side edge to side edge. Air flowing past the taper section 25 exits through this channel 41. However, rail edge tapers or steps 44' and 44" connected to the channel 41 help to pressurise the rail from this source of air.

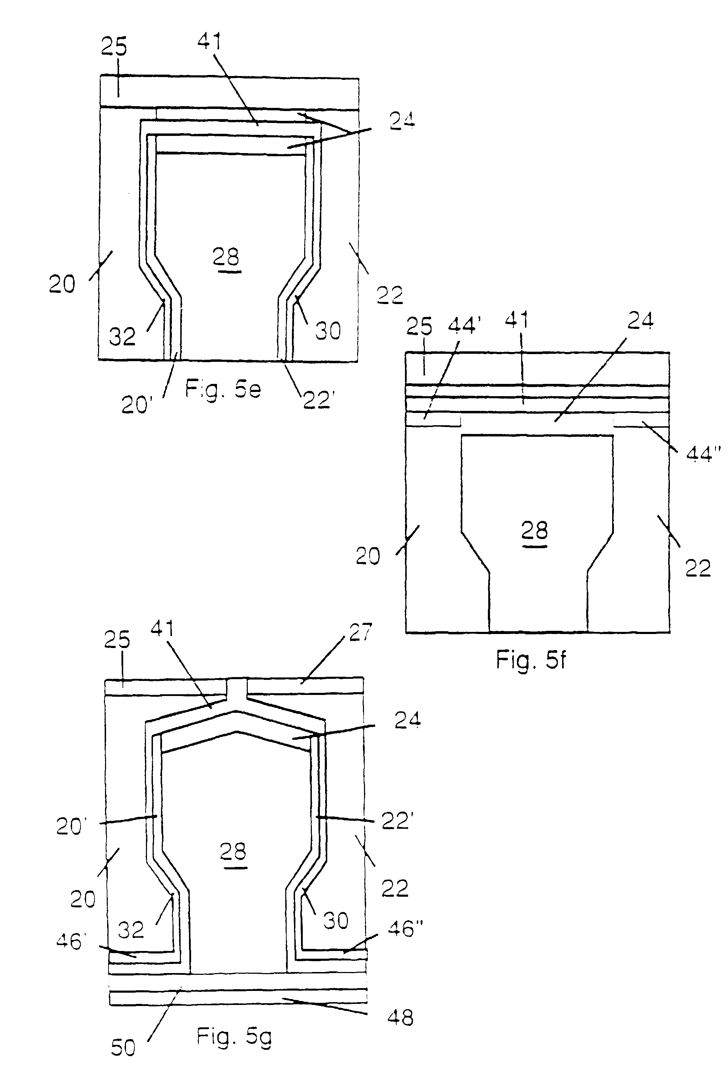

Figure 5g illustrates another variation very similar to that of Figure 3c. This configuration has the anterior pressure relief channel 41 of Figure 5a connected to the isolation channels 30 and 32. However, the pressure relief channel 41 is angled or V-shaped so that air will tend to flow to the down stream isolation channel (30 or 32) enhancing skew compensation.

At the trailing edge of the slider of Figure 5g, the negative pressure cavity 28 bends into a channel 50, which communicates with the side edges of the slider. As well, isolation channels 30 and 32 have side vents 46' and 46", respectively. The combination of the side vents permits the transducer bearing portion 48 of the head to be a solid rail, which gives more area for transducer elements and eliminates the need to machine off a portion of the transducer materials during manufacture. This is important for certain machining methods (e.g. laser machining) that cannot remove all of the transducer materials effectively.

It will be appreciated that the described isolation channels 30 and 32, anterior pressure relief channel 41, leading edge tapers 25, 27, spoiler channels 31, cavity dividers 36, and other particulars herein described, may be selectively combined in other ways to produce an NPAB slider having optimum properties for a given application.

## Claims

1. A negative pressure air bearing slider for a magnetic head of a rotary disc drive, said slider comprising:
two side rails (20,22);
a cross rail (24);
a negative pressure cavity (28) disposed between the side rails and between the cross rail and a trailing edge of the slider; and
a pair of isolation means (20',22',30,32) disposed between the negative pressure cavity and the side rails wherein said isolation means substantially isolate positive pressure adjacent a side rail from at least part of the negative pressure cavity,
characterised in that
the isolation means terminate in the negative pressure cavity so do not extend to the trailing edge.

2. A negative pressure air bearing slider as claimed in claim 1, in which said isolation means comprises a pair of isolation channels (30,32) and a pair of separating rails (20',22'), each isolation channels being disposed between a respective side rail and the negative pressure cavity and each separating rail being disposed between a respective isolation channel and the negative pressure cavity.

## Patentansprüche

1. Mit negativem Druck arbeitender Luftlager-Gleiter für einen Magnetkopf eines Laufwerks mit rotierenden Platten, wobei der Gleiter folgendes umfaßt:
zwei Seitenschienen (20, 22),
eine Querschiene (24),
einen einen negativen Druck aufweisenden Hohlraum (28), der zwischen den Seitenschienen und zwischen der Querschiene und der in Bewegungsrichtung hinteren Kante des Gleiters angeordnet ist, und
zwei Isolationseinrichtungen (20', 22', 30, 32) die zwischen dem einen negativen Druck aufweisenden Hohlraum und den Seitenschienen angeordnet sind, wobei die Isolationseinrichtungen im wesentlichen den positiven Druck benachbart zu einer Seitenschiene von zumindest einem Teil des Hohlraums mit negativem Druck isolieren,
dadurch gekennzeichnet,
daß die Isolationseinrichtungen in dem einen negativen Druck aufweisenden Hohlraum enden, so daß sie sich nicht zur hinteren Kante erstrecken.

2. Mit negativem Druck arbeitender Luftlager-Gleiter nach Anspruch 1, bei dem die Isolationseinrichtungen zwei Isolationskanäle (30, 32) und zwei Trennschienen (20', 22') umfassen, wobei jeder der Isolationskanäle zwischen einer jeweiligen Seitenschiene und dem einen negativen Druck aufweisenden Hohlraum angeordnet ist, und jede Trennschiene zwischen einem jeweiligen Isolationskanal und dem einen negativen Druck aufweisenden Hohlraun angeordnet ist.

## Revendications

1. Patin de tête à pression négative destiné à une tête magnétique d'un disque dur rotatif, ledit patin comprenant :
deux rails latéraux (20, 22) ;
un rail transversal (24) ;
une cavité de pression négative (28) disposée entre les rails latéraux et entre le rail transversal et un bord arrière du patin ; et
une paire de moyens d'isolation (20', 22', 30, 32) disposés entre la cavité de pression négative et les rails latéraux, lesdits moyens d'isolation isolant sensiblement la pression positive à proximité d'un rail latéral par rapport à au moins une partie de la cavité de pression négative, caractérisé en ce que
les moyens d'isolation se terminent dans la cavité de pression négative, si bien qu'ils ne s'étendent pas jusqu'au bord arrière.

2. Patin de tête à pression négative selon la revendication 1, dans lequel lesdits moyens d'isolation comprennent une paire de canaux d'isolation (30, 32) et une paire de rails de séparation (20', 22'), chaque canal d'isolation étant disposé entre un rail latéral respectif et la cavité de pression négative et chaque rail de séparation étant disposé entre un canal d'isolation respectif et la cavité de pression négative.
